# EUROPEAN PATENT APPLICATION

(11) **EP 4 742 774 A1**
(43) Date of publication of application: **13.05.2026**
(21) Application number: 24838628.6
(22) Date of filing: 01.07.2024
(51) Int. Cl.: H04W 52/02

(54) **LOW-POWER WAKE-UP SIGNAL INDICATION METHODS AND APPARATUSES, DEVICE AND READABLE STORAGE MEDIUM**

(30) Priority: 07.07.2023 CN 202310838877
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Walaski, Jan Filip
(86) International application number: PCT/CN2024/102807
(87) International publication number: WO 2025/011373

(57) **Abstract**

Disclosed in the present application are low-power wake-up signal indication methods and apparatuses, a device and a readable storage medium. A method comprises: a terminal receives first indication information, the first indication information being used for indicating related information of an LP-WUS provided by a network side device for the terminal.

## Description

### CROSS-REFERENCE TO RELATED APPLICATIONS

This application claims priority to Chinese Patent Application No. 202310838877.7, filed in China on July 7, 2023, which is incorporated herein by reference in its entirety.

### TECHNICAL FIELD

This application belongs to the technical field of communications, and particularly relates to a method and apparatus for indicating a low power wake up signal, a device, and a readable storage medium.

### BACKGROUND

A low power wake up signal (Low Power Wake Up Signal, LP-WUS) may be applied to terminals in the radio resource control idle state (RRC_IDLE), the radio resource control inactive state (RRC_INACTIVE), and the radio resource control connected state (RRC_CONNECTED). If a network side enables the LP-WUS functionality for all terminals, when one terminal is to be paged, both the LP-WUS and the paging (paging) message may be sent at the same time, resulting in high overhead for the LP-WUS on the network side.

### SUMMARY

Embodiments of this application provide a method and apparatus for indicating a low power wake up signal, a device, and a readable storage medium, to solve a problem of significant overhead associated with a network side LP-WUS.

According to a first aspect, a method for indicating a low power wake up signal is provided, including:
receiving, by a terminal, first indication information, where the first indication information is used for indicating information related to a low power wake up signal (LP-WUS) provided by a network side device for the terminal.

According to a second aspect, a method for indicating a low power wake up signal is provided, including:
sending, by a network side device, first indication information to a terminal, where the first indication information is used for indicating information related to a low power wake up signal (LP-WUS) provided by the network side device for the terminal.

According to a third aspect, an apparatus for indicating a low power wake up signal is provided, including:
a first receiving module, configured to receive first indication information, where the first indication information is used for indicating information related to a low power wake up signal (LP-WUS) provided by a network side device for a terminal.

According to a fourth aspect, an apparatus for indicating a low power wake up signal is provided, including:
a second sending module, configured to send first indication information to a terminal, where the first indication information is used for indicating information related to a low power wake up signal (LP-WUS) provided by a network side device for the terminal.

According to a fifth aspect, a communication device is provided. The communication device includes a processor, a memory, and a program or instruction stored on the memory and runnable on the processor, where the program or instruction, when executed by the processor, implements the steps of the method according to the first aspect or the second aspect.

According to a sixth aspect, a readable storage medium is provided. The readable storage medium has a program or instruction stored therein. The program or the instruction, when executed by a processor of a terminal, implements the steps of the method according to the first aspect, or when executed by a processor of a network side device, implements the steps of the method according to the second aspect.

According to a seventh aspect, a chip is provided. The chip includes a processor and a communication interface. The communication interface is coupled to the processor. The processor is configured to run a program or an instruction to implement the steps of the method according to the first aspect or the second aspect.

According to an eighth aspect, a computer program/program product is provided. The computer program/program product is stored in a non-transitory storage medium, and the program/program product is executed by at least one processor to implement the steps of the method according to the first aspect or the second aspect.

According to a ninth aspect, a communication system is provided. The communication system includes a terminal and a network side device. The terminal is configured to perform the steps of the method according to the first aspect, and the network side device is configured to perform the steps of the method according to the second aspect.

In the embodiments of this application, the terminal receives the first indication information. The first indication information is used for indicating the information related to the LP-WUS provided by the network side device for the terminal, so that the network side can effectively control the terminal to use the LP-WUS, and reduce cases in which all terminals use the LP-WUS, thereby saving signaling overhead of the LP-WUS on the network side. In addition, by limiting use of the LP-WUS, it is ensured that a matched terminal uses the LP-WUS in a matching scenario, thereby ensuring performance when the LP-WUS is used.

### BRIEF DESCRIPTION OF THE DRAWINGS

FIG. 1 is a schematic diagram of a 802.11ba low power wake up receiver;
FIG. 2 is a schematic structural diagram of a WUR beacon frame;
FIG. 3 is a first schematic diagram of a working principle of an NR LP WUR/WUS;
FIG. 4 is a second schematic diagram of a working principle of an NR LP WUR/WUS;
FIG. 5 is a schematic diagram of an on-off keying signal;
FIG. 6 is a schematic diagram of OFDM modulation;
FIG. 7 is a schematic architectural diagram of a wireless communication system according to an embodiment of this application;
FIG. 8 is a first flowchart of a method for indicating a low power wake up signal according to an embodiment of this application;
FIG. 9 is a second flowchart of a method for indicating a low power wake up signal according to an embodiment of this application;
FIG. 10 is a first schematic diagram of an apparatus for indicating a low power wake up signal according to an embodiment of this application;
FIG. 11 is a second schematic diagram of an apparatus for indicating a low power wake up signal according to an embodiment of this application;
FIG. 12 is a schematic diagram of a terminal according to an embodiment of this application;
FIG. 13 is a schematic diagram of a network side device according to an embodiment of this application; and
FIG. 14 is a schematic diagram of a communication device according to an embodiment of this application.

### DETAILED DESCRIPTION

The technical solutions in the embodiments of this application are clearly described with reference to the accompanying drawings in the embodiments of this application. Apparently, the described embodiments are some of the embodiments of this application rather than all of the embodiments. All other embodiments obtained by those of ordinary skill in the art based on the embodiments of this application fall within the protection scope of this application.

In this application, the terms "first", "second", etc. are used for distinguishing similar objects, instead of describing a specific sequence or order. It is to be understood that the terms used in this way are exchangeable where appropriate, so that the embodiments of this application may be implemented in sequences other than those illustrated or described herein. In addition, objects distinguished by "first" and "second" are generally of the same class and the quantity thereof is not limited. For example, a first object may be one or a plurality. In addition, "or" in this application indicates at least one of connected objects. For example, "A or B" encompasses three solutions, that is, solution 1: including A and excluding B; solution 2: including B and excluding A; and solution 3: including both A and B. The character "/" generally indicates an "or" relationship between the associated objects before and after it.

The term "indication" in this application may refer to either a direct indication (or explicit indication) or an indirect indication (or implicit indication). The direct indication may be understood as a sender explicitly informing a receiver of content such as specific information, operations to be performed, or requested results in the indication sent. The indirect indication may be understood as the receiver determining corresponding information according to the indication sent by the sender, or making a determination and determining operations to be performed, requested results, or the like according to a determination result.

It is to be noted that the technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in this application are usually interchangeably used. The described technology may be applied not only to the system and the radio technology mentioned above, but also to another system and radio technology. A new radio (New Radio, NR) system is described below as an example, and the term NR is used in most of the following description. Nevertheless, these technologies may also be applied to systems other than an application of the NR system, such as a 6^{th} generation (6^{th} Generation, 6G) communication system.

For the convenience of understanding the embodiments of this application, the following technical points will be introduced first.

### 1. An 802.11ba wake-up receiver (Wake-Up Receiver, WUR) beacon (beacon).

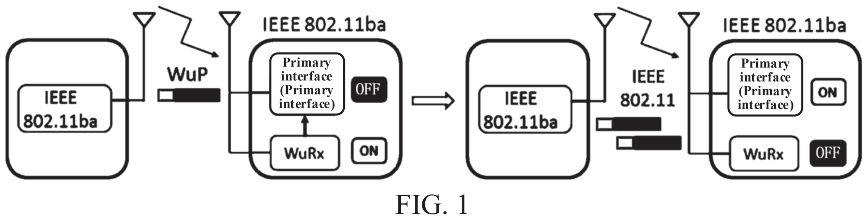

The 802.11ba designs a low power wake up receiver. As shown in FIG. 1, an 802.11 user includes two parts: a primary interface and a wake up receiver. The primary interface is configured to send and receive wireless data. The wake up receiver is configured to wake up the primary interface. Before being woken up, the primary interface is in a disabled state, and does not send or receive the data. The wake up receiver receives a wake up signal sent by an 802.11 wireless access point (Access Point, AP). The wake up signal may be an on-off keying (On-Off Keying, OOK) modulation signal, so that the wake up receiver may detect the wake up signal by means of envelope detection, thereby reducing power consumption to an order of several hundred microwatts, and greatly reducing power consumption of the 802.11 user.

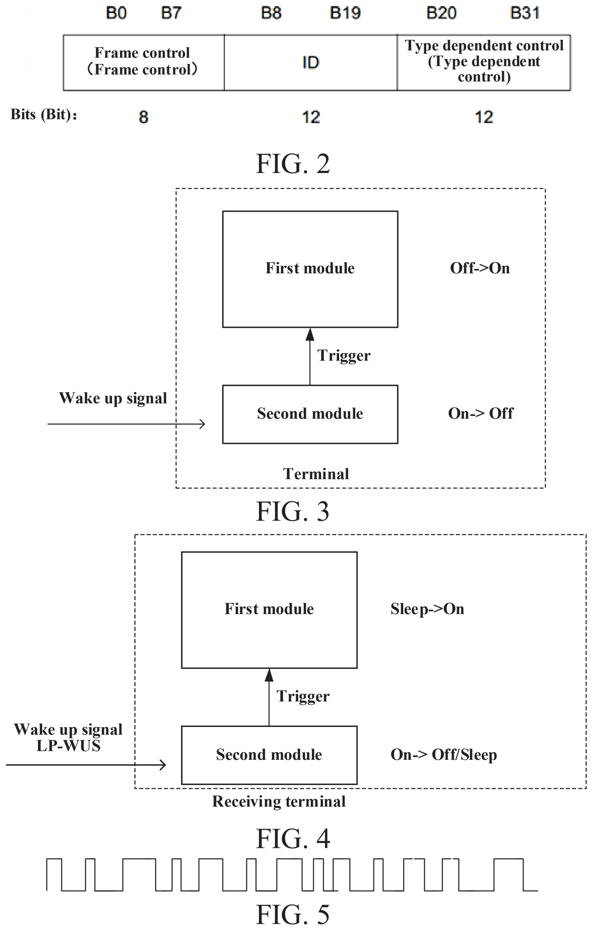

To maintain synchronization between the low power wake up receiver and the AP, the 802.11ba periodically sends WUR beacon signals to convey time information. As shown in FIG. 2, a type dependent control (type dependent control) in a medium access control (Medium Access Control, MAC) frame (frame) of the WUR beacon carries 12 bits of information from bits [5:16] of 64 bits of a timing synchronization function (Timing Synchronization Function, TSF) timer (timer) of the AP. After receiving the 12-bit information, the local TSF timer of the user is updated according to a time update criterion defined by the 802.11ba, thereby achieving a purpose of synchronization with the AP. A sending period and an offset of a sending starting position of the WUR beacon are indicated by an operation element (operation element) sent by the AP. The period represents the minimum number of TSF time units between two beacon transmissions, while the starting position is the number of TSF time units offset from TSF0. In the event of carrier sense multiple access (Carrier Sense Multiple Access, CSMA) deferrals (deferrals), the WLJR beacon experiences delayed sending in a current period but is still sent at a position determined by the sending period and the sending starting position of the WUR beacon in subsequent periods.

### 2. Regarding LP-WUS in new radio (New Radio, NR).

In the related art, research work about LP WUR/WUS is introduced to a mobile cellular system. The LP-WUS is a low power wake up signal, is received by a low power receiver LP WUR, and is configured to wake up a main communication module, etc. As shown in FIG. 3, a terminal includes two modules. A first module is the main communication module, configured to receive and send mobile communication data, and a second module is a low power wake up receiving module, configured to receive the low power wake up signal and a low power beacon signal that are sent by a sending terminal. The low power wake up signal is used for waking up the main communication module at a receiving terminal, while the low power beacon signal is used for providing time reference information and other information for receiving the low power wake up signal, and may also provide wake up link management. As shown in FIG. 3, when the first module is not waked up by the second module, the first module is always in a disabled state, and does not send or receive the data. When downlink data arrives, the second module detects a wake up signal sent by the sending terminal, and the wake up signal includes information about the terminal, the second module triggers the first module to switch from the disabled state to an enabled state, for data receiving and sending. The second module may be enabled continuously or intermittently. When enabled, the second module may receive both the low power wake up signal and the low power beacon signal.

### 3. Regarding LP-WUS

A basic format of the LP-WUS is shown in Table 1.

**Table 1**

| | |
|---|---|
| Preamble field (Preamble field) | Data field (Data field) |

The preamble field serves purposes including, but not limited to, at least one of detection of the LP-WUS, synchronization, or determination of a data rate (data rate). Additionally, the preamble field may subsequently be used for indicating user identifiers, user group identifiers, and the like.

The data field indicates a data carrying part.

### 4. Regarding low power receiver

The low power receiver is also known as a low power wake up receiver (Low Power Wake Up Receiver, LP-WUR) or an almost zero power wake up receiver (Almost zero power wake up Receiver, AZP-WUR). A basic working principle of the LP-WUR is that the receiving terminal includes the first module and the second module. As shown in FIG. 4, the first module is the main communication module, configured to receive and send the mobile communication data. The second module is a low power receiving module (also referred to as the low power wake up receiving module), configured to receive the above-mentioned wake up signal. The terminal in an energy saving state turns on the low power receiving module to monitor the LP-WUS, and turns off the main communication module. When the downlink data arrives, a network sends the wake up signal to the terminal. After monitoring the wake up signal through the low power receiving module, the terminal triggers, through a series of determining, the main communication module to switch from off to on. In this case, the low power receiving module enters the disabled state from the enabled state. The low power wake up receiving module may be enabled continuously or intermittently. When enabled, the low power wake up receiving module may receive the low power wake up signal.

### 5. Regarding low power wake up signal

To reduce a reception activity of the terminal in a standby state and truly disable a radio frequency (Radio Frequency, RF) module and a baseband modem (MODEM) module, thereby significantly reducing power consumption of communication reception, a receiver with almost "zero" power may be introduced in the receiving module of the terminal. The receiver with almost "zero" power does not require complex signal detection (such as amplification, filtering, and quantization) of the RF module or signal processing by the MODEM, but only relies on passive matched filtering and signal processing with low power consumption.

On a base station side, the wake up signal is triggered on demand (on-demand), so that the receiver with almost "zero" power may be activated to learn of an activated notification, to trigger a series of processes in the terminal, for example, turning on a radio frequency transceiver module, and a baseband processing module.

The wake up signals are usually some simple on-off keying (On-Off Keying, OOK) signals. As shown in FIG. 5, the receiver may learn of a wake up notification through simple energy detection and subsequent possible processes such as sequence detection and recognition.

An existing NR system generally uses a signal modulation method of orthogonal frequency division multiplexing (Orthogonal Frequency Division Multiplexing, OFDM). Therefore, the OOK signal may be generated using an OFDM signal generation method, for example, by sending or not sending OFDM-modulated sequences to represent ON/OFF in a time domain. The OOK signal may be received by using a receiver with low power consumption. However, this type of receiver has poor receiving performance and poor coverage.

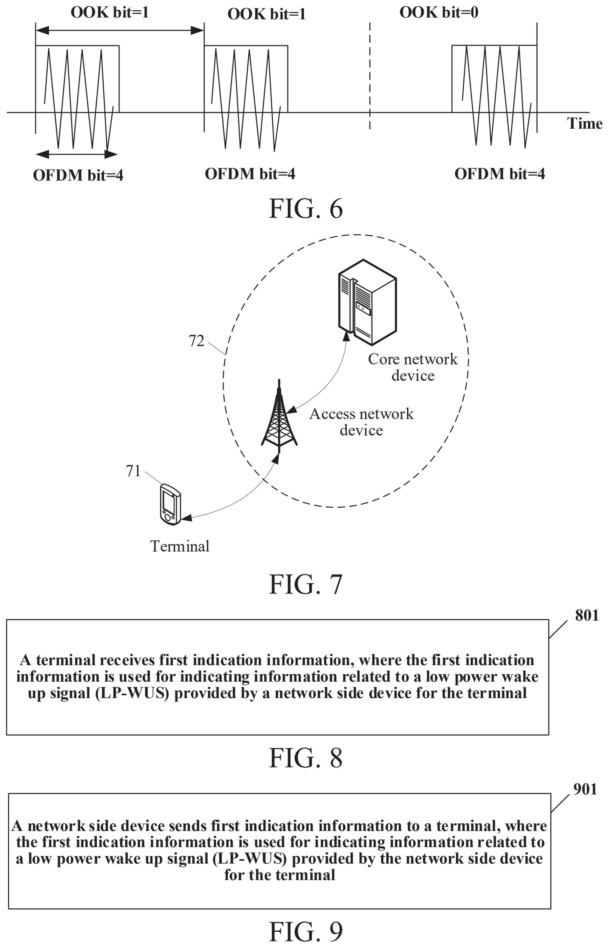

Further, the OFDM-modulated sequences that are turned ON may further carry information through different sequences. For example, two sequences represent 0 and 1 information, respectively, or four sequences represent 00, 01, 10, and 11 information, respectively. As shown in FIG. 6, part of the information is modulated through OOK, while the other part of the information is carried by ON-level OFDM sequences.

Since demodulating the OFDM sequences requires a receiver with an OFDM signal reception capability, this kind of receiver generally has better demodulation performance compared to the low power receiver that can only demodulate the OOK signal.

FIG. 7 shows a block diagram of a wireless communication system applicable to an embodiment of this application. The wireless communication system includes a terminal 71 and a network side device 72.

The terminal 71 may be a terminal side device, such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home appliance (a home device with a wireless communication function, such as a refrigerator, a television, a washing machine, or furniture), a game console, a personal computer (Personal Computer, PC), a teller machine, or a self-service machine. The wearable device includes: a smart watch, a smart hand ring, a smart headphone, smart glasses, a smart jewelry (a smart bracelet, a smart chain bracelet, a smart ring, a smart necklace, a smart ankle bangle, a smart ankle chain, and the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. In addition to the above-mentioned terminal devices, the terminal involved in this application may also be a chip within the terminal, for example, a modem (Modem) chip, and a system on chip (System on Chip, SoC). It is to be understood that a specific type of the terminal 71 is not limited in the embodiments of this application.

The network side device 72 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point (Access Point, AS), a wireless fidelity (Wireless Fidelity, WiFi) node, and the like. The base station may be referred to as a node B (Node B, NB), an evolved node B (evolved Node B, eNB), the next generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (Home Node B, HNB), a home evolved node B, a transmission reception point (Transmission Reception Point, TRP), or any other appropriate term in the field. As long as the same technical effect is achieved, the base station is not limited to specific technical terminology. It is to be noted that in the embodiments of this application, only the base station in the NR system is used an example for illustration, and the specific type of the base station is not limited.

The core network device may include, but is not limited to, any one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be understood that the core network device in the NR system is used only as an example for description in the embodiments of this application, but the specific type of the core network device is not limited.

With reference to the accompanying drawings, a method and apparatus for indicating a low power wake up signal, a communication device, and a readable storage medium provided in the embodiments of this application are described in detail below according to some embodiments and application scenarios thereof.

Referring to FIG. 8, an embodiment of this application provides a method for indicating a low power wake up signal, performed by a terminal. Specific steps include: step 801.

Step 801: The terminal receives first indication information, where the first indication information is used for indicating information related to an LP-WUS provided by a network side device for the terminal.

In an implementation, the information related to the LP-WUS provided by the network side device for the terminal includes information related to the LP-WUS negotiated between the terminal and the network side device.

Optionally, the terminal receives the first indication information sent by the network side device. The network side device may include a core network device or a base station. That is, the terminal receives the first indication information sent by the core network device or the base station. Content in the first indication information may be entirely from the core network device, or the content in the first indication information may be entirely from the base station, or a part of the content in the first indication information is from the core network device, and the other part is from the base station.

In an implementation of this application, the first indication information includes at least one of the following:
(1) first information, which is used for indicating that the terminal is able to use the LP-WUS, where
   it is to be understood that "able to use" in this specification may be understood as "may be used";
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
   optionally, the terminal of the preset type includes, but is not limited to, at least one of the following: (e)reduced capability user equipment ((e)reduced capability UE, (e)redcap UE), an Internet of Things UE (IoT UE), wearable UE (wearable UE), indoor UE (indoor UE), an ordinary terminal, a static terminal, and a low mobility terminal;
   optionally, the terminal of the preset service type includes, but is not limited to, at least one of the following: a terminal of an IoT service, a terminal of a delay-required service, and a terminal of a delay tolerant (delay tolerant) service;
   optionally, the terminal with the preset feature or the terminal with the preset attribute includes, but is not limited to, at least one of the following: (1) a terminal in a particular motion state, where optionally, the particular motion state includes, but is not limited to, being static or moving at a low speed; or (2) a terminal with a paging probability less than a preset value;
   optionally, the terminal satisfying the preset condition includes, but is not limited to, at least one of the following: (1) a terminal with power sensitivity (power sensitivity) satisfying the preset condition, such as the power sensitivity being greater than or less than a preset threshold; and (2) a terminal with a power consumption profile (power consumption profile) satisfying the preset condition, such as the power consumption profile being greater than or less than a preset value;
(4) fourth information, which is used for indicating that the configured LP-WUS could be used for to the target terminal;
(5) fifth information, which is used for indicating enabling of the LP-WUS feature or functionality for the target terminal, where
   when the first indication information carries the third information, the fourth information, or the fifth information, the first indication information may limit the target terminal or limit the target terminal to use the LP-WUS feature or functionality under a specific condition;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

In an implementation of this application, before the terminal receives the first indication information, the method further includes:
sending, by the terminal, eighth information. The eighth information is used by the terminal to negotiate with the network side device regarding at least one of the following:
(1) whether to configure the LP-WUS for the target terminal;
(2) whether to enable the LP-WUS functionality or feature for the target terminal;
(3) whether the target terminal is able to use the LP-WUS; and
(4) whether the configured LP-WUS could be used for to the target terminal.

In the related art, the LP-WUS functionality or feature is enabled (enable) or disabled (Disable) through the configuration on a network side, or several preset conditions are configured for the terminal. In a case that the preset conditions are satisfied, the terminal may use the LP-WUS functionality. In an implementation, before the terminal acquires the above-mentioned configuration, the terminal may receive the first indication information sent by the network side device. That is, before the above-mentioned configuration, the terminal interacts with the network side in advance to determine whether the LP-WUS functionality or feature may be used, or before the above-mentioned configuration, the network side determines, according to a capability of the terminal or the eighth information reported by the terminal, whether the terminal may use the LP-WUS functionality or feature.

Optionally, the terminal sends the eighth information to the network side device, and the network side device may be a base station or a core network device.

In an implementation, the sending, by the terminal, eighth information to the core network device includes: directly sending, by the terminal, the eighth information to the core network device, or sending, by the terminal, the eighth information to the base station, and sending, by the base station, the eighth information to the core network device.

Optionally, the base station sends the eighth information to the core network device through an initiate UE message (Initiate UE message) or an interface message between the base station and a core network.

In another implementation, the sending, by the terminal, eighth information to the base station includes: directly sending, by the terminal, the eighth information to the base station, or sending, by the terminal, the eighth information to the core network device and sending, by the core network device, the eighth information to the base station, alternatively, sending, by the terminal, the eighth information to a first base station and then sending, by the first base station, the eighth information to a second base station.

In an implementation of this application, in a case that the network side device includes the base station, the first indication information is carried in at least one of a radio resource control (Radio Resource Control, RRC) connection establishment message, an RRC configuration or reconfiguration message, an RRC release (release) message, a broadcast message, and another downlink message.

Optionally, the broadcast message includes, but is not limited to, system information (System Information, SI).

Optionally, the other downlink message includes, but is not limited to, an RRC message, a medium access control (Medium Access Control, MAC) control element (Control Element, CE), and a downlink control information (Downlink Control Information, DCI) message.

In another implementation of this application, in a case that the network side device includes the core network device, the first indication information is carried in at least one of a registration request response (registration request response) message and a downlink non-access-stratum (Non-Access-Stratum, NAS) message.

Optionally, the core network device includes, but is not limited to, an access and mobility management function (Access and Mobility Management Function, AMF).

In an implementation of this application, in a case that the network side device includes the base station, the eighth information is carried in at least one of an RRC connection establishment request message, terminal capability information, UE assistance information (UE assistance information, UAI), and another uplink message.

Optionally, the other uplink message includes, but is not limited to, an RRC message, a MAC message, and an uplink control information (Uplink Control Information, UCl) message.

In another implementation of this application, in a case that the network side device includes the core network device, the eighth information is carried in at least one of an uplink registration request (registration request) message and another uplink NAS message.

In an implementation of this application, the eighth information includes at least one of the following:
(1) ninth information, which is used for indicating that the terminal requests to use the LP-WUS feature or functionality;
(2) tenth information, which is used for indicating the LP-WUS expected by the terminal;
(3) eleventh information, which is used for indicating that the terminal requests the network side device to configure the LP-WUS, where
   optionally, when the eighth information includes at least one of the ninth information, the tenth information, and the eleventh information, the eighth information is further used for indicating that the terminal supports the LP-WUS, that is, the terminal implicitly indicates, by using at least one of the ninth information, the tenth information, and the eleventh information, that the terminal supports the LP-WUS;
(4) twelfth information, which is used for indicating whether the terminal supports the LP-WUS;
(5) a type of the terminal, where
   optionally, the type of the terminal includes, but is not limited to, at least one of the following: (e)reduced capability user equipment ((e)reduced capability UE, (e)redcap UE), an Internet of Things UE (IoT UE), wearable UE (wearable UE), indoor UE (indoor UE), an ordinary terminal, a static terminal, and a low mobility terminal;
(6) a service of the terminal, where
   optionally, the service of the terminal includes, but is not limited to, at least one of the following: an IoT service, a delay-required service, and a delay tolerant (delay tolerant) service;
(7) a service type of the terminal;
(8) a feature or attribute of the terminal;
(9) a motion state or motion attribute of the terminal, where
   optionally, the motion state of the terminal includes, but is not limited to, one of the following: stationary, moving at a low speed, moving at an intermediate speed, and moving at a high speed;
(10) a paging probability of the terminal, where
   optionally, the paging probability of the terminal includes: a current paging probability of the terminal, or a paging probability attribute of the terminal or a service;
(11) power sensitivity (power sensitivity) of the terminal;
(12) a power consumption profile (power consumption profile) of the terminal; and
(13) a capability of the terminal, where
   optionally, the capability of the terminal includes a capability of the terminal on a core network side or a capability of the terminal on a wireless access network side.

In another implementation of this application, the LP-WUS expected by the terminal includes: whether the terminal expects to use the LP-WUS, or the configuration of the LP-WUS expected by the terminal.

In another implementation of this application, the configuration of the LP-WUS includes at least one of the following:
(1) a period of a low power synchronization signal (Low Power Synchronization Signal, LP-SS);
(2) a period of the LP-WUS;
(3) a monitoring occasion of the LP-WUS, where
   optionally, the monitoring occasion includes, but is not limited to, a position in a time-frequency space domain;
(4) an offset between the LP-WUS and a paging early indicator (Paging Early Indicator, PEI) signal, a paging (Paging) message carried in a physical downlink control channel (Physical Downlink Control Channel, PDCCH), or a paging message carried in a physical downlink shared channel (Physical Downlink Shared Channel, PDSCH); and
(5) an association between the LP-WUS and the paging early indicator signal, the paging message carried in the physical downlink control channel, or the paging message carried in the physical downlink shared channel.

In another implementation of this application, in a case that the terminal receives the first indication information, the method further includes:
performing, by the terminal, a first operation, where the first operation includes at least one of the following: (1) monitoring the LP-WUS; and (2) entering low power sleep.

Optionally, the entering low power sleep includes, but is not limited to, a main receiver (Main receiver) of the terminal or the terminal entering deep sleep (Deep sleep), low power sleep, ultra deep sleep (Ultra deep sleep), ultra-low-power sleep, or the like.

In an implementation, in a case that the first indication information received by the terminal includes the configuration of the LP-WUS, the terminal performs the first operation.

In an implementation, in a case that the first indication information received by the terminal includes the configuration of the LP-WUS and further includes at least one of the third information, the fourth information, and the fifth information, and the terminal is the target terminal, the terminal performs the first operation.

In an implementation, in a case that the first indication information received by the terminal includes at least one of the third information, the fourth information, and the fifth information, and the terminal is the target terminal, the terminal performs the first operation, or the terminal performs the first operation according to the configuration of the LP-WUS provided by the network side.

In an implementation, the performing, by the terminal, a first operation includes: performing, by the terminal, the first operation in a case that a first preset condition is satisfied. The first preset condition includes at least one of the following: (1) a channel condition is higher than a first preset threshold; (2) measurement performance is higher than a second preset threshold; (3) a variation of the measurement performance is less than a third preset threshold; (4) a difference between the measurement performance and reference performance is less than a fourth preset threshold; and (5) the terminal is stationary or has low mobility.

In an embodiment of this application, the terminal receives the first indication information. The first indication information is used for indicating the information related to the low power wake up signal (LP-WUS) provided by the network side device for the terminal, so that the network side can effectively control the terminal to use the LP-WUS, and reduce cases in which all terminals use the LP-WUS, thereby saving signaling overhead of the LP-WUS on the network side. In addition, by limiting use of the LP-WUS, it is ensured that a matched terminal uses the LP-WUS in a matching scenario, thereby ensuring performance when the LP-WUS is used.

Referring to FIG. 9, an embodiment of this application provides a method for indicating a low power wake up signal, performed by a network side device. Specific steps include: step 901.

Step 901: The network side device sends first indication information to a terminal, where the first indication information is used for indicating information related to a low power wake up signal (LP-WUS) provided by the network side device for the terminal.

In an implementation of this application, the first indication information includes at least one of the following:
(1) first information, which is used for indicating that the terminal is able to use the LP-WUS;
(2) second information, which is used for indicating enabling of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

In an implementation of this application, before the network side device sends the first indication information to the terminal, the method further includes:
receiving, by the network side device, eighth information sent by the terminal. The eighth information is used by the terminal to negotiate with the network side device regarding at least one of the following:
(1) whether to configure the LP-WUS for the target terminal;
(2) whether to enable the LP-WUS functionality or feature for the target terminal;
(3) whether the target terminal is able to use the LP-WUS; and
(4) whether the configured LP-WUS could be used for to the target terminal.

In an implementation of this application, the network side device sending first indication information to a terminal includes:
sending, by the network side device, the first indication information to the terminal according to at least one of the eighth information, a capability of the terminal, a terminal type, a terminal service type, and a terminal feature.

In an implementation of this application, in a case that the network side device includes a base station, the first indication information is carried in at least one of an RRC connection establishment message, an RRC configuration or reconfiguration message, an RRC release message, a broadcast message, and another downlink message.

In an implementation, the base station directly sends the first indication information to the terminal.

In another implementation, the base station sends the first indication information to a core network device, and then sends the first indication information to the terminal through the core network device.

In another implementation, a first base station sends the first indication information to a second base station, and then sends the first indication information to the terminal through the second base station.

In another implementation of this application, in a case that the network side device includes the core network device, the first indication information is carried in at least one of a registration request response message and another downlink NAS message.

In an implementation, the core network device directly sends the first indication information to the terminal.

In another implementation, the core network device sends the first indication information to the base station, and sends the first indication information to the terminal through the base station. For example, the core network device sends the first indication information to the base station through an UE context setup request (UE context setup request) message or an interface message between the core network device and the base station.

In an implementation of this application, in a case that the network side device includes the base station, the eighth information is carried in at least one of an RRC connection establishment request message, terminal capability information, UE assistance information, and another uplink message.

In another implementation of this application, in a case that the network side device includes the core network device, the eighth information is carried in at least one of an uplink registration request message and another uplink NAS message.

In an implementation of this application, the eighth information includes at least one of the following:
(1) ninth information, which is used for indicating that the terminal requests to use the LP-WUS feature or functionality;
(2) tenth information, which is used for indicating the LP-WUS expected by the terminal;
(3) eleventh information, which is used for indicating that the terminal requests the network side device to configure the LP-WUS;
(4) twelfth information, which is used for indicating whether the terminal supports the LP-WUS;
(5) a type of the terminal;
(6) a service of the terminal;
(7) a service type of the terminal;
(8) a feature or attribute of the terminal;
(9) a motion state of the terminal;
(10) a paging probability of the terminal;
(11) power sensitivity of the terminal;
(12) a power consumption profile of the terminal; and
(13) a capability of the terminal.

In an implementation of this application, the configuration of the LP-WUS includes at least one of the following:
(1) a period of a low power synchronization signal (LP-SS);
(2) a period of the LP-WUS;
(3) a monitoring occasion of the LP-WUS;
(4) an offset between the LP-WUS and a paging early indicator signal, a paging message carried in a physical downlink control channel, or a paging message carried in a physical downlink shared channel; and
(5) an association between the LP-WUS and the paging early indicator signal, the paging message carried in the physical downlink control channel, or the paging message carried in the physical downlink shared channel.

In another implementation of this application, when the eighth information includes at least one of the ninth information, the tenth information, and the eleventh information, the eighth information is further used for indicating that the terminal supports the LP-WUS.

In an embodiment of this application, the network side device sends the first indication information to the terminal. The first indication information is used for indicating the information related to the low power wake up signal (LP-WUS) provided by the network side device for the terminal, so that the network side can effectively control the terminal to use the LP-WUS, and reduce cases in which all terminals use the LP-WUS, thereby saving signaling overhead of the LP-WUS on the network side. In addition, by limiting use of the LP-WUS, it is ensured that a matched terminal uses the LP-WUS in a matching scenario, thereby ensuring performance when the LP-WUS is used.

Three implementations of this application are described below with reference to Embodiment 1, Embodiment 2, and Embodiment 3.

### Embodiment 1

Step 1: A terminal sends eighth information to a core network device. The eighth information is used by the terminal to negotiate with the core network regarding at least one of the following:
(1) whether to configure the LP-WUS for the target terminal;
(2) whether to enable the LP-WUS functionality or feature for the target terminal;
(3) whether the target terminal is able to use the LP-WUS; and
(4) whether the configured LP-WUS could be used for to the target terminal.

Step 2: The core network device sends first indication information to the terminal, where the first indication information is used for indicating information related to the low power wake up signal (LP-WUS) provided by the core network device for the terminal.

In an implementation of this application, the first indication information includes at least one of the following:
(1) first information, which is used for indicating that the terminal is able to use the LP-WUS;
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

### Embodiment 2

Step 1: A core network device sends first indication information to a terminal, where the first indication information is used for indicating information related to a low power wake up signal (LP-WUS) provided by the core network device for the terminal.

In an implementation of this application, the first indication information includes at least one of the following:
(1) first information, which is used for indicating that the terminal is able to use the LP-WUS;
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

### Embodiment 3

Step 1: A base station sends first indication information to a terminal, where the first indication information is used for indicating information related to a low power wake up signal (LP-WUS) provided by the base station for the terminal.

In an implementation of this application, the first indication information includes at least one of the following:
(1) first information, which is used for indicating that the terminal is able to use the LP-WUS;
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

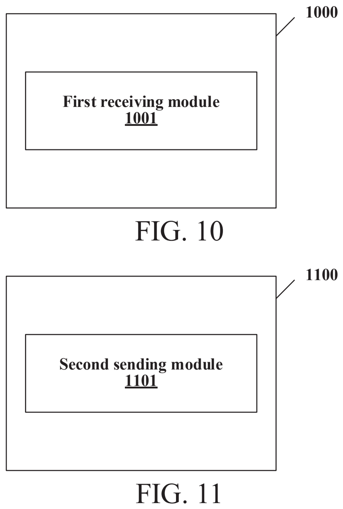

Referring to FIG. 10, an embodiment of this application provides an apparatus for indicating a low power wake up signal applied to a terminal. The apparatus 1000 includes:
a first receiving module 1001, configured to receive first indication information, where the first indication information is used for indicating information related to a low power wake up signal (LP-WUS) provided by a network side device for the terminal.

In an implementation of this application, the first indication information includes at least one of the following:
(1) first information, which is used for indicating that the terminal is able to use the LP-WUS;
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

In an implementation of this application, the apparatus further includes:
a first sending module, configured to send eighth information. The eighth information is used by the terminal to negotiate with the network side device regarding at least one of the following:
(1) whether to configure the LP-WUS for the target terminal;
(2) whether to enable the LP-WUS functionality or feature for the target terminal;
(3) whether the target terminal is able to use the LP-WUS; and
(4) whether the configured LP-WUS could be used for to the target terminal.

In an implementation of this application, in a case that the network side device includes a base station, the first indication information is carried in at least one of a radio resource control (RRC) connection establishment message, an RRC configuration or reconfiguration message, an RRC release message, a broadcast message, and another downlink message.

In another implementation of this application, in a case that the network side device includes the core network device, the first indication information is carried in at least one of a registration request response message and another downlink NAS message.

In an implementation of this application, in a case that the network side device includes the base station, the eighth information is carried in at least one of an RRC connection establishment request message, terminal capability information, UE assistance information, and another uplink message.

In another implementation of this application, in a case that the network side device includes the core network device, the eighth information is carried in at least one of an uplink registration request message and another uplink NAS message.

In an implementation of this application, the eighth information includes at least one of the following:
(1) ninth information, which is used for indicating that the terminal requests to use the LP-WUS feature or functionality;
(2) tenth information, which is used for indicating the LP-WUS expected by the terminal;
(3) eleventh information, which is used for indicating that the terminal requests the network side device to configure the LP-WUS, where
(4) twelfth information, which is used for indicating whether the terminal supports the LP-WUS;
(5) a type of the terminal;
(6) a service of the terminal;
(7) a service type of the terminal;
(8) a feature or attribute of the terminal;
(9) a motion state of the terminal;
(10) a paging probability of the terminal;
(11) power sensitivity of the terminal;
(12) a power consumption profile of the terminal; and
(13) a capability of the terminal.

In another implementation of this application, the LP-WUS expected by the terminal includes: whether the terminal expects to use the LP-WUS, or the configuration of the LP-WUS expected by the terminal.

In another implementation of this application, the configuration of the LP-WUS includes at least one of the following:
(1) a period of a low power synchronization signal (LP-SS);
(2) a period of the LP-WUS;
(3) a monitoring occasion of the LP-WUS;
(4) an offset between the LP-WUS and a paging early indicator signal, a paging message carried in a physical downlink control channel, or a paging message carried in a physical downlink shared channel; and
(5) an association between the LP-WUS and the paging early indicator signal, the paging message carried in the physical downlink control channel, or the paging message carried in the physical downlink shared channel.

In another implementation of this application, when the eighth information includes at least one of the ninth information, the tenth information, and the eleventh information, the eighth information is further used for indicating that the terminal supports the LP-WUS.

In another implementation of this application, the apparatus further includes: a processing module, configured to perform at least one of the following in a case that the first indication information is received: (1) the terminal monitors the LP-WUS; and (2) the terminal enters low power sleep.

The apparatus provided in the embodiments of this application can implement the various processes implemented in the method embodiment of FIG. 9, and achieve a same technical effect. To avoid repetition, details are not described herein again.

Referring to FIG. 11, an embodiment of this application provides an apparatus for indicating a low power wake up signal, applied to a network side device. The apparatus 1100 includes:
a second sending module 1101, configured to send first indication information to a terminal, where the first indication information is used for indicating information related to a low power wake up signal (LP-WUS) provided by the network side device for the terminal.

In an implementation of this application, the first indication information includes at least one of the following:
(1) first information, which is used for indicating that the terminal is able to use the LP-WUS;
(2) second information, which is used for indicating enabling (enable) of an LP-WUS feature (feature) or functionality (functionality);
(3) third information, which is used for indicating that a target terminal is able to use the LP-WUS, where
   optionally, the target terminal includes at least one of the following: a terminal of a preset type, a terminal of a preset service, a terminal of a preset service type, a terminal with a preset feature, a terminal with a preset attribute, or a terminal satisfying a preset condition;
(4) fourth information, which is used for indicating that the configured LP-WUS could be used for to the target terminal;
(5) fifth information, which is used for indicating enabling of the LP-WUS feature or functionality for the target terminal;
(6) sixth information, which is used for indicating that the network side device confirms that the terminal is able to use the LP-WUS;
(7) seventh information, which is used for indicating that the network side device confirms configuration of the LP-WUS preferred by the terminal; and
(8) configuration of the LP-WUS.

In an implementation of this application, the apparatus further includes:
a second receiving module, configured to receive eighth information sent by the terminal. The eighth information is used by the terminal to negotiate with the network side device regarding at least one of the following:
(1) whether to configure the LP-WUS for the target terminal;
(2) whether to enable the LP-WUS functionality or feature for the target terminal;
(3) whether the target terminal is able to use the LP-WUS; and
(4) whether the configured LP-WUS could be used for to the target terminal.

In an implementation of this application, the second sending module is further configured to: send the first indication information to the terminal according to the eighth information.

In an implementation of this application, in a case that the network side device includes a base station, the first indication information is carried in at least one of an RRC connection establishment message, an RRC configuration or reconfiguration message, an RRC release message, a broadcast message, and another downlink message.

In another implementation of this application, in a case that the network side device includes the core network device, the first indication information is carried in at least one of a registration request response message and another downlink NAS message.

In an implementation of this application, in a case that the network side device includes the base station, the eighth information is carried in at least one of an RRC connection establishment request message, terminal capability information, UE assistance information, and another uplink message.

In another implementation of this application, in a case that the network side device includes the core network device, the eighth information is carried in at least one of an uplink registration request message and another uplink NAS message.

In an implementation of this application, the eighth information includes at least one of the following:
(1) ninth information, which is used for indicating that the terminal requests to use the LP-WUS feature or functionality;
(2) tenth information, which is used for indicating the LP-WUS expected by the terminal;
(3) eleventh information, which is used for indicating that the terminal requests the network side device to configure the LP-WUS;
(4) twelfth information, which is used for indicating whether the terminal supports the LP-WUS;
(5) a type of the terminal;
(6) a service of the terminal;
(7) a service type of the terminal;
(8) a feature or attribute of the terminal;
(9) a motion state of the terminal;
(10) a paging probability of the terminal;
(11) power sensitivity of the terminal;
(12) a power consumption profile of the terminal; and
(13) a capability of the terminal.

In an implementation of this application, the configuration of the LP-WUS includes at least one of the following:
(1) a period of a low power synchronization signal (LP-SS);
(2) a period of the LP-WUS;
(3) a monitoring occasion of the LP-WUS;
(4) an offset between the LP-WUS and a paging early indicator signal, a paging message carried in a physical downlink control channel, or a paging message carried in a physical downlink shared channel; and
(5) an association between the LP-WUS and the paging early indicator signal, the paging message carried in the physical downlink control channel, or the paging message carried in the physical downlink shared channel.

In another implementation of this application, when the eighth information includes at least one of the ninth information, the tenth information, and the eleventh information, the eighth information is further used for indicating that the terminal supports the LP-WUS.

The apparatus provided in the embodiments of this application can implement the various processes implemented in the method embodiment of FIG. 9, and achieve a same technical effect. To avoid repetition, details are not described herein again.

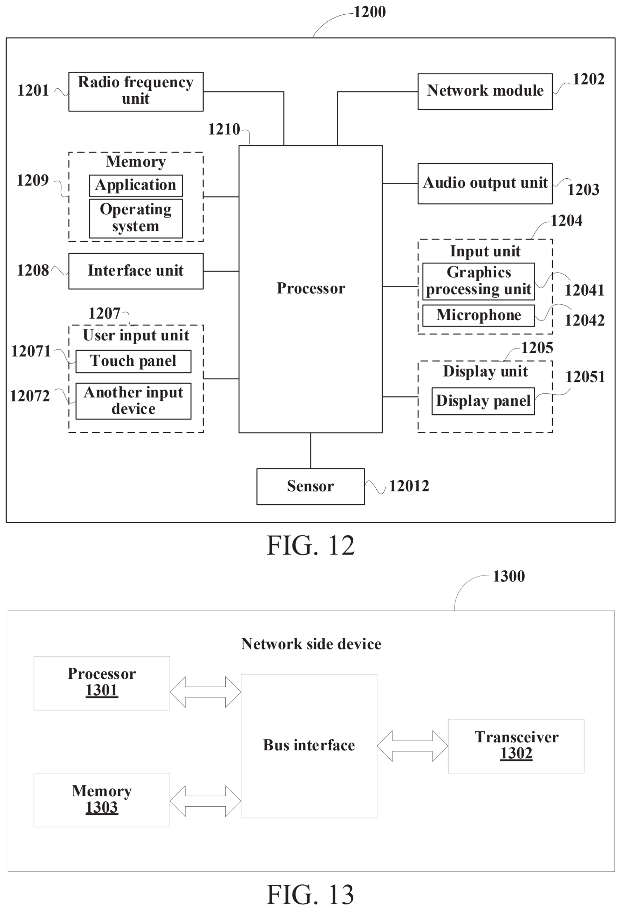

FIG. 12 is a schematic diagram of a hardware structure of a terminal for implementing an embodiment of this application. The terminal 1200 includes, but is not limited to, at least part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Those skilled in the art may understand that the terminal 1200 may further include a power supply (such as a battery) that supplies power to various components. The power supply may be logically connected to the processor 1210 through a power management system, thereby implementing functions of charging management, discharging management, and power consumption management through the power management system. A terminal structure shown in FIG. 12 does not constitute a limitation to the terminal. The terminal may include more or fewer components than those shown in the figure, or some components may be combined, or a different component deployment may be used. Details are not described herein again.

It is to be understood that, in the embodiments of this application, the input unit 1204 may include a graphics processing unit (Graphics Processing Unit, GPU) 12041 and a microphone 12042. The graphics processing unit 12041 processes image data of a static picture or a video that is obtained by an image acquisition apparatus (for example, a camera) in a video acquisition mode or an image acquisition mode. The display unit 1206 may include a display panel 120121. The display panel 120121 may be configured by using a liquid crystal display, an organic light-emitting diode, or another form. The user input unit 1207 includes at least one of a touch panel 12031 and another input device 12032. The touch panel 12031 is also referred to as a touchscreen. The touch panel 12031 may include two parts: a touch detection apparatus and a touch controller. The other input device 12032 may include, but is not limited to, a physical keyboard, a functional key (such as a volume control key and a switch key), a track ball, a mouse, and a joystick. Details are not described herein again.

In an embodiment of this application, the radio frequency unit 1201 receives downlink data from a network side device and then may transmit the downlink data to the processor 1210 for processing. In addition, the radio frequency unit 1201 may send uplink data to the network side device. Generally, the radio frequency unit 1201 includes, but is not limited to, an antenna, an amplifier, a transceiver, a coupler, a low noise amplifier, a duplexer, and the like.

The memory 1209 may be configured to store a software program or instruction and various data. The memory 1209 may mainly include a first storage area for storing a program or instruction and a second storage area for storing data. The first storage area may store an operating system, an application or an instruction required for at least one function (such as a sound playback function and an image playback function), and the like. In addition, the memory 1209 may include a volatile memory or a non-volatile memory, or the memory 1209 may include a non-transitory memory. The non-volatile memory or the non-transitory memory may be a read-only memory (Read-Only Memory, ROM), a programmable real-only memory (Programmable ROM, PROM), an erasable programmable real-only memory (Erasable PROM, EPROM), an electrically erasable programmable real-only memory (Electrically EPROM, EEPROM), or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1209 in this embodiment of this application includes, but is not limited to, these memories and any other suitable types of memories.

The processor 1210 may include one or more processing units. Optionally, the processor 1210 integrates an application processor and a modem processor. The application processor mainly processes operations involving an operating system, a user interface, an application, and the like. The modem processor mainly processes wireless communication signals, and is, for example, a baseband processor. It is to be understood that the above-mentioned modem processor may also not be integrated into the processor 1210.

The terminal provided in this embodiment of this application can implement the various processes implemented in the method embodiment of FIG. 8, and achieve a same technical effect. To avoid repetition, details are not described herein again.

Please refer to FIG. 13, which is a structural diagram of a network side device applied in an embodiment of the present invention. As shown in FIG. 13, a communication device 1300 includes: a processor 1301, a transceiver 1302, a memory 1303, and a bus interface, where the processor 1301 may be responsible for managing a bus architecture and performing general processing. The memory 1303 may store data used when the processor 1301 performs an operation.

In an embodiment of the present invention, the communication device 1300 further includes: a program that is stored in the memory 1303 and is runnable on the processor 1301, and the program, when executed by the processor 1301, implement the steps in the method shown in FIG. 9 above.

In FIG. 13, the bus architecture may include any number of interconnected buses and bridges. Specifically, one or more processors represented by the processor 1301 are linked to various circuits of a memory represented by the memory 1303. The bus architecture may further link various other circuits such as a peripheral device, a voltage regulator, and a power management circuit together. These are well known in the art, and therefore, are not further described herein. The bus interface provides an interface. The transceiver 1302 may be a plurality of elements, namely including a transmitter and a receiver, and providing a unit configured to communicate with various other apparatuses on a transmission medium.

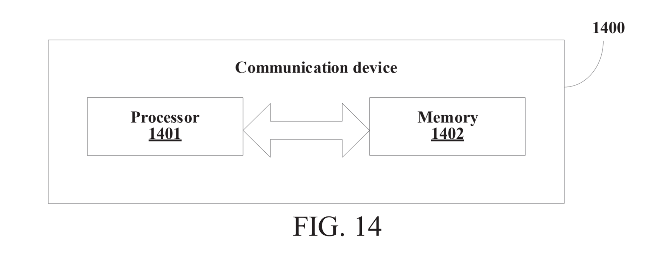

As shown in FIG. 14, an embodiment of this application further provides a communication device 1400, including a processor 1401 and a memory 1402. The memory 1402 has a program or instruction runnable on the processor 1401 stored therein. For example, when the communication device 1400 is a terminal, the program or the instruction, when executed by the processor 1401, implements the various steps of the method embodiment in FIG. 8. When the communication device 1400 is a network side device, the program or the instruction, when executed by the processor 1401, implements the various steps of the method embodiment in FIG. 9, and can achieve the same technical effect. To avoid repetition, details are not described herein again.

An embodiment of this application further provides a readable storage medium, having a program or instruction stored therein. The program or instruction, when executed by a processor, implements the various processes of the method in FIG. 8 or FIG. 9 and the above-mentioned various embodiments, and can achieve the same technical effect. To avoid repetition, details are not described herein again.

The processor is the processor in the terminal described in the above-mentioned embodiments. The readable storage medium includes a computer-readable storage medium, such as a computer read-only memory (ROM), a random access memory (RAM), a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or instruction, to implement the various processes shown in FIG. 8 or FIG. 9 and in the above-mentioned various method embodiments, and can achieve the same technical effects. To avoid repetition, details are not described herein again.

It is to be understood that the chip mentioned in this embodiment of this application may also be referred to as a system level chip, a system chip, a chip system, a system on chip, or the like.

An embodiment of this application further provides a computer program/program product. The computer program/program product is stored on a storage medium. The computer program/program product, when executed by at least one processor, implements the various processes shown in FIG. 8 or FIG. 9 and in the above-mentioned various method embodiments, and can achieve the same technical effects. To avoid repetition, details are not described herein again.

An embodiment of this application further provides a communication system. The communication system includes a terminal and a network side device. The terminal is configured to perform the various processes in FIG. 8 and the above-mentioned various method embodiments. The network side device is configured to perform the various processes in FIG. 9 and the above-mentioned various method embodiments, and can achieve the same technical effect. To avoid repetition, details are not described herein again.

It is to be understood that in this specification, the term "include", "comprise", or any other variants thereof are intended to specify a non-exclusive inclusion, so that a process, a method, an article, or an apparatus including a series of elements not only includes those elements, but also includes other elements that are not explicitly listed, or elements that are inherent to such a process, a method, an article, or an apparatus. An element proceeded by the statement "including one..." does not, without further limitations, preclude the existence of additional identical elements in the process, the method, the article, or the apparatus that includes the element. In addition, it is to be noted that the scope of the method and the apparatus in the implementations of this application is not limited to function execution in the order shown or discussed, and may further include function execution in a substantially simultaneous manner or in an opposite order according to the involved functions. For example, the described method may be performed in a different order from the described order, and various steps may also be added, omitted, or combined. In addition, features described with reference to some examples may be combined in other examples.

Through the description of the above-mentioned implementations, those skilled in the art can clearly understand that the methods according to the above-mentioned embodiments may be implemented by a computer software product and a necessary general-purpose hardware platform, and certainly, may alternatively be implemented by hardware. The computer software product is stored in a storage medium (such as an ROM, an RAM, a magnetic disk, and an optical disc) and includes several instructions for instructing a terminal or a network side device to perform the methods described in the various embodiments of this application.

The embodiments of this application are described above with reference to the accompanying drawings. However, this application is not limited to the specific implementations described above, and the specific implementations described above are only exemplary and not limitative. Those of ordinary skill in the art may make many forms of implementations under the teaching of this application without departing from the spirit of this application and the protection scope of the claims, and these implementations shall all fall within the protection of this application.

## Claims

1. A method for indicating a low power wake up signal, comprising:
receiving, by a terminal, first indication information, wherein the first indication information is used for indicating information related to a low power wake up signal (LP-WUS) provided by a network side device for the terminal.

2. The method according to claim 1, wherein the first indication information comprises at least one of the following:
first information, which is used for indicating that the terminal is able to use the LP-WUS;
second information, which is used for indicating to enable an LP-WUS feature or functionality;
third information, which is used for indicating that a target terminal is able to use the LP-WUS;
fourth information, which is used for indicating that the configured LP-WUS could be used for to the target terminal;
fifth information, which is used for indicating enabling of the LP-WUS feature or functionality for the target terminal;
sixth information, which is used for indicating that the network side device confirms that the terminal is able to use the LP-WUS;
seventh information, which is used for indicating that the network side device confirms configuration of the LP-WUS preferred by the terminal; and
configuration of the LP-WUS.

3. The method according to claim 1 or 2, wherein before the receiving, by a terminal, first indication information, the method further comprises:
sending, by the terminal, eighth information, wherein the eighth information is used by the terminal to negotiate with the network side device regarding at least one of the following:
whether to configure the LP-WUS for the target terminal;
whether to enable the LP-WUS functionality or feature for the target terminal;
whether the target terminal is able to use the LP-WUS; and
whether the configured LP-WUS could be used for to the target terminal.

4. The method according to claim 1 or 2, wherein
in a case that the network side device comprises a base station, the first indication information is carried in at least one of a radio resource control (RRC) connection establishment message, an RRC configuration or reconfiguration message, an RRC release message, a broadcast message, and another downlink message;
alternatively,
in a case that the network side device comprises a core network device, the first indication information is carried in at least one of a registration request response message and another downlink non-access-stratum (NAS) message.

5. The method according to claim 3, wherein
in a case that the network side device comprises a base station, the eighth information is carried in at least one of an RRC connection establishment request message, terminal capability information, UE assistance information, or another uplink message;
alternatively,
in a case that the network side device comprises a core network device, the eighth information is carried in at least one of an uplink registration request message or another uplink NAS message.

6. The method according to claim 3, wherein the eighth information comprises at least one of the following:
ninth information, which is used for indicating that the terminal requests to use the LP-WUS feature or functionality;
tenth information, which is used for indicating the LP-WUS expected by the terminal;
eleventh information, which is used for indicating that the terminal requests the network side device to configure the LP-WUS;
twelfth information, which is used for indicating whether the terminal supports the LP-WUS;
a type of the terminal;
a service of the terminal;
a service type of the terminal;
a feature or attribute of the terminal;
a motion state of the terminal;
a paging probability of the terminal;
power sensitivity of the terminal;
a power consumption profile of the terminal; and
a capability of the terminal.

7. The method according to claim 6, wherein the LP-WUS expected by the terminal comprises: whether the terminal expects to use the LP-WUS, or the configuration of the LP-WUS expected by the terminal.

8. The method according to claim 2 or 7, wherein the configuration of the LP-WUS comprises at least one of the following:
a period of a low power synchronization signal (LP-SS);
a period of the LP-WUS;
a monitoring occasion of the LP-WUS;
an offset between the LP-WUS and a paging early indicator signal, a paging message carried in a physical downlink control channel, or a paging message carried in a physical downlink shared channel; and
an association between the LP-WUS and the paging early indicator signal, the paging message carried in the physical downlink control channel, or the paging message carried in the physical downlink shared channel.

9. The method according to claim 6, wherein when the eighth information comprises at least one of the ninth information, the tenth information, and the eleventh information, the eighth information is further used for indicating that the terminal supports the LP-WUS.

10. The method according to claim 2 or 3, wherein the target terminal comprises at least one of the following: a terminal of a preset type, a terminal of a preset service, a terminal of a preset service type, a terminal with a preset feature, a terminal with a preset attribute, or a terminal satisfying a preset condition.

11. The method according to claim 1 or 2, wherein in a case that the terminal receives the first indication information, the method further comprises:
performing, by the terminal, a first operation, wherein the first operation comprises at least one of the following: monitoring the LP-WUS and entering low power sleep.

12. A method for indicating a low power wake up signal, comprising:
sending, by a network side device, first indication information to a terminal, wherein the first indication information is used for indicating information related to a low power wake up signal (LP-WUS) provided by the network side device for the terminal.

13. The method according to claim 12, wherein the first indication information comprises at least one of the following:
first information, which is used for indicating that the terminal is able to use the LP-WUS;
second information, which is used for indicating to enable an LP-WUS feature or functionality;
third information, which is used for indicating that a target terminal is able to use the LP-WUS;
fourth information, which is used for indicating that the configured LP-WUS could be used for to the target terminal;
fifth information, which is used for indicating enabling of the LP-WUS feature or functionality for the target terminal;
sixth information, which is used for indicating that the network side device confirms that the terminal is able to use the LP-WUS;
seventh information, which is used for indicating that the network side device confirms configuration of the LP-WUS preferred by the terminal; and
configuration of the LP-WUS.

14. The method according to claim 12 or 13, wherein before the sending, by a network side device, first indication information to a terminal, the method further comprises:
receiving, by the network side device, eighth information sent by the terminal, wherein the eighth information is used by the terminal to negotiate with the network side device regarding at least one of the following:
whether to configure the LP-WUS for the target terminal;
whether to enable the LP-WUS functionality or feature for the target terminal;
whether the target terminal is able to use the LP-WUS; and
whether the configured LP-WUS could be used for to the target terminal.

15. The method according to claim 14, wherein the sending, by a network side device, first indication information to a terminal comprises:
sending, by the network side device, the first indication information to the terminal according to the eighth information.

16. The method according to claim 12 or 13, wherein
in a case that the network side device comprises a base station, the first indication information is carried in at least one of an RRC connection establishment message, an RRC configuration or reconfiguration message, an RRC release message, a broadcast message, or another downlink message;
alternatively,
in a case that the network side device comprises a core network device, the first indication information is carried in at least one of a registration request response message and a downlink NAS message.

17. The method according to claim 14, wherein
in a case that the network side device comprises a base station, the eighth information is carried in at least one of an RRC connection establishment request message, terminal capability information, UE assistance information, or another uplink message;
alternatively,
in a case that the network side device comprises a core network device, the eighth information is carried in at least one of an uplink registration request message and an uplink NAS message.

18. The method according to claim 14, wherein the eighth information comprises at least one of the following:
ninth information, which is used for indicating that the terminal requests to use the LP-WUS feature or functionality;
tenth information, which is used for indicating the LP-WUS expected by the terminal;
eleventh information, which is used for indicating that the terminal requests the network side device to configure the LP-WUS;
twelfth information, which is used for indicating whether the terminal supports the LP-WUS;
a type of the terminal;
a service of the terminal;
a service type of the terminal;
a feature or attribute of the terminal;
a motion state of the terminal;
a paging probability of the terminal;
power sensitivity of the terminal;
a power consumption profile of the terminal; and
a capability of the terminal.

19. The method according to claim 13 or 18, wherein the configuration of the LP-WUS comprises at least one of the following:
a period of an LP-SS;
a period of the LP-WUS;
a monitoring occasion of the LP-WUS;
an offset between the LP-WUS and a paging early indicator signal, a paging message carried in a physical downlink control channel, or a paging message carried in a physical downlink shared channel; and
an association between the LP-WUS and the paging early indicator signal, the paging message carried in the physical downlink control channel, or the paging message carried in the physical downlink shared channel.

20. The method according to claim 18, wherein when the eighth information comprises at least one of the ninth information, the tenth information, and the eleventh information, the eighth information is further used for indicating that the terminal supports the LP-WUS.

21. The method according to claim 13 or 14, wherein the target terminal comprises at least one of the following: a terminal of a preset type, a terminal of a preset service, a terminal of a preset service type, a terminal with a preset feature, a terminal with a preset attribute, or a terminal satisfying a preset condition.

22. An apparatus for indicating a low power wake up signal, comprising:
a first receiving module, configured to receive first indication information, wherein the first indication information is used for indicating information related to a low power wake up signal (LP-WUS) provided by a network side device for a terminal.

23. An apparatus for indicating a low power wake up signal, comprising:
a second sending module, configured to send first indication information to a terminal, wherein the first indication information is used for indicating information related to a low power wake up signal (LP-WUS) provided by a network side device for the terminal.

24. A communication device, comprising a processor, a memory, and a program or instruction stored on the memory and runnable on the processor, wherein the program or instruction, when executed by the processor, implements the steps of the method according to any one of claims 1 to 21.

25. A readable storage medium, having a program or instruction stored therein, wherein the program or instruction, when executed by a processor of a terminal, implements the steps of the method according to any one of claims 1 to 21.
